# EUROPEAN PATENT SPECIFICATION

(11) **EP 1 083 415 B1**
(45) Date of publication and mention of the grant of the patent: **23.11.2005**
(21) Application number: 00660155.3
(22) Date of filing: 11.09.2000
(51) Int. Cl.: G01G 19/03

(54) **Weighing method and arrangement**
Verfahren und Einrichtung zum Wiegen
Méthode et dispositif de pesage

(30) Priority: 10.09.1999 FI 991928
(43) Date of publication of application: 14.03.2001
(73) Proprietor: TAMTRON OY, 33561 Tampere (FI)
(72) Inventor: Asikainen, Pentti, 35800 Mänttä (FI)
(74) Representative: Kupiainen, Juhani Kalervo

(56) References cited:
- EP-A- 1 076 229
- US-A- 3 556 237
- US-A- 4 553 618
- PATENT ABSTRACTS OF JAPAN vol. 1997, no. 03, 31 March 1997 (1997-03-31) -& JP 08 313331 A (MATSUSHITA ELECTRIC IND CO LTD), 29 November 1996 (1996-11-29)

## Description

The invention relates to a weighing method and arrangement. More specifically, the invention relates to a method and an arrangement for producing reliable weighing results in weighing appliances. The invention relates further to a condition monitoring method and arrangement for a weighing apparatus.

In the prior art solutions, moving weights are typically weighed by using signal processing methods in an attempt to filter an error caused by acceleration in a weighing appliance. In addition, there are methods available, wherein the final weighing result is calculated from a multitude of samples.

The prior art involves substantial drawbacks. Both prior art methods are quite tedious. The filtering of a disturbance signal produced by accelerations in a weighing appliance is quite tedious and, notwithstanding meticulous filtering, the weighing results are often inaccurate. Picking up a plurality of samples is also very slow, since the more disturbance factors appear in connection with a measurement the more significant is the variance in the average of a set of measurements and the more measurement results are required for bringing the standard deviation within a statistically tolerable range.

Document EP-A-1 076 229, which falls under Art. 54(3) and (4) EPC, discloses a measurement system for weighing moving vehicles. The system comprises correction sensors for compensating the effects of movement of the vehicle in the weighing results. Document JP-A-08 313 331 discloses another weighing system for weighing a moving vehicle. This system includes a camera for determining the acceleration of the vehicle, and measurement value of the load cells is compensated by the determined acceleration. However, these systems do not disclose how to weigh a moving load which is located on a vehicle. Documents US-A-3 556 237 and US-A-4 553 618 disclose scales for measuring a load under movement. The systems comprise accelerometers for compensating the effect of acceleration of the load. In order to achieve accurate results of the weighing measurements, the accelerometer need to be linear on a wide range of acceleration.

It is an object of the invention to eliminate the above drawbacks. The present inventive method and arrangement can be used for quickly and reliably eliminating error factors caused by acceleration, and thus the compilation of measurement results improves in terms of reliability and speed.

All of the above benefits associated with a solution of the invention are achievable by an embodiment, in which a separate acceleration transducer or sensor is adapted to measure of a mass to be weighed, and a separate weighing sensor to measure its kinetic weight. The acceleration sensor's measurement results can be used for determining an additional weight caused by acceleration for thus calculating the static weight of a mass from the kinetic weight thereof. The acceleration sensor can be located in contact with or spaced apart from the weighing sensor.

The calibration values for set-ups of the sensors are stored in a recording instrument included in the same measuring device as the sensors, the discussed measuring device being replaceable without special calibration procedures.

When the scales constitutes a part of loading, carrying or shipping equipment, the acceleration sensor compensates for vertical accelerations, the vertical angle of a machine itself, as well as for vertical accelerations resulting from uneven terrain as the machine is moving.

A weighing method of the invention is characterized by claim 1.

A weighing arrangement of the invention is characterized by claim 9.

The use of a weighing arrangement of the invention is characterized by claim 15.

Preferred embodiments of the invention are also disclosed in the non-independent claims 2 to 8 and 10 to 14.

Preferred embodiments of the invention will now be described in more detail with reference made to the accompanying drawings, wherein
fig. 1 shows one embodiment for a method of the invention in a flow chart,
fig. 2A shows one embodiment for an arrangement of the invention in a block diagram,
fig. 2B shows a block diagram representing one embodiment for an arrangement of the invention, featuring the use of several sensors,
fig. 2C shows a block diagram representing a second embodiment for an arrangement of the invention, featuring the use of several sensors,
fig. 2D shows a block diagram representing one embodiment for an arrangement of the invention, with a special feature relating to the use of serial buffers, and
fig. 3 shows a block diagram representing one embodiment for an arrangement of the invention, with a special feature relating to more sophisticated data processing.

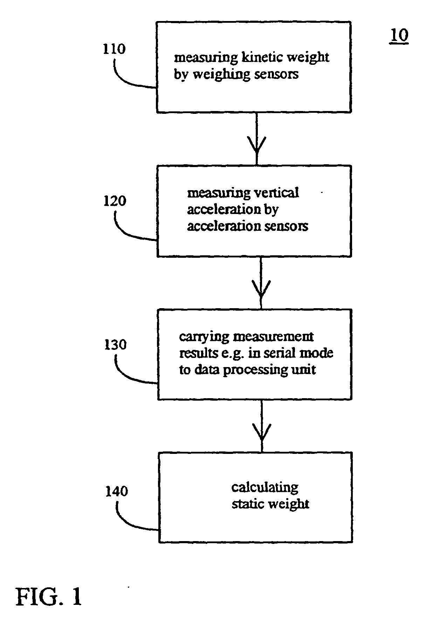

Fig. 1 depicts a flow chart representing one embodiment for a method of the invention, which initially comprises a sequence 110 for measuring a kinetic weight by means of weighing sensors. This is followed by a sequence 120 for measuring a vertical component of acceleration by means of acceleration sensors. As it happens, the acceleration sensor is also adapted to measure a vertical angle of the sensor relative to a horizontal plane. The measurement results can be delivered in a serial communication mode to a data processing unit in a sequence 130. Alternatively, the data processing unit can be located in communication with the sensors, rendering the transfer in a serial mode unnecessary. A sequence 140 comprises measuring a static weight by means of a data processing unit. The data processing unit may be a PC or some other relevant preferred computer-based apparatus, such as a Psion or Apple Macintosh, or a mobile communicator, such as a UMTS (Universal Mobile Telecommunications Service), GSM (Global System for Mobile Communications), CDMA (Code Division Multiple Access), WCDMA (Wide Band Code Division Multiple Access), NMT, Iridium, Inmarsat or TelDesic mobile communicator.

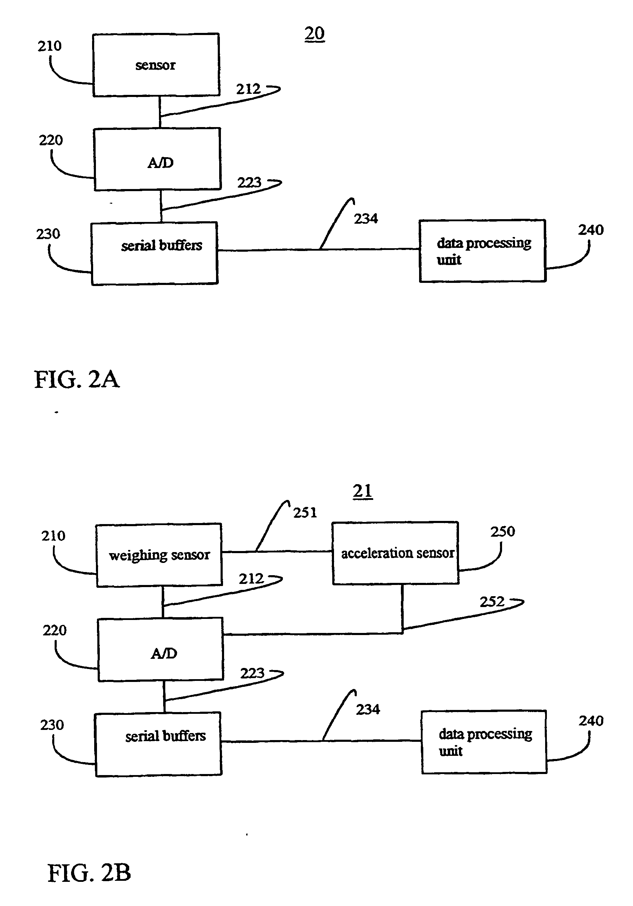

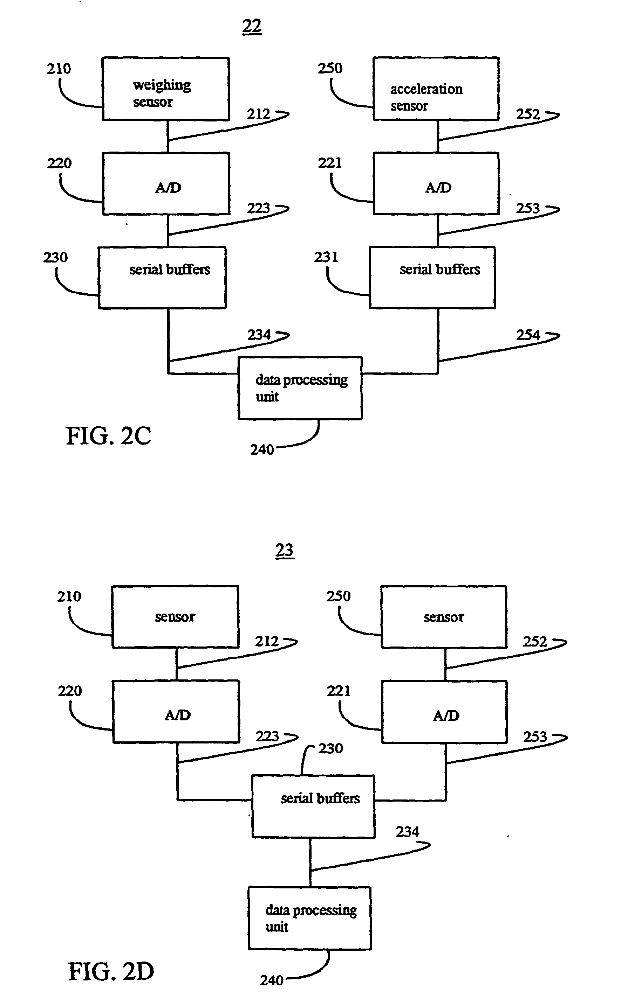

In the arrangement of fig. 2, a sensor 210 is connected to an A/D converter 220 by way of a link 212. The A/D converter is in turn connected to serial communication buffers 230 by way of a link 223. The serial buffers 230 are connected to a data processing unit 240 by way of a communication link 234. In some embodiments, the serial buffers 230 can be preferably of the type RS 232C, RS 422/485, CAN or some other similar type. In preferred embodiments, the communication link to a data processing unit can be provided by way of a local network or some other immobile communication bus, or by way of a radio. Alternatively, the data processing unit may be located in contact or in vicinity of a sensor unit, whereby the serial-mode communication and serial buffers are not absolutely necessary. The sensor 210 comprises both a weighing sensor and an acceleration sensor in some preferred embodiments, but it is also possible that the weighing sensor and the acceleration sensor be located at a distance from each other.

The links 212, 223 are typically conductors. In one embodiment, the A/D converter 220 and the serial buffers 230 are established on a common IC circuit (Integrated Circuit). It is also possible that the A/D converter 220 and the serial buffers 230 be established on the same IC circuit as a digital signal processor (DSP) and/or a modem (modulator-demodulator). The link 234 comprises preferably an immobile communication link or a UMTS, GSM, CDMA, WCDMA, NMT, Iridium, Inmarsat or TelDesic communication link implemented by way of a radio.

The acceleration sensor can be integrated in contact with the weighing sensor or it can be spaced apart from the weighing sensor. In one preferred embodiment, the sensor 210, the A/D converter 220 and the serial buffers 230 are integrated for a single measuring apparatus. In addition, when the sensor has the calibration values of its calibration parameters stored in the discussed measuring apparatus, the measuring apparatus will be replaceable without calibrating the data processing unit since the output signal of the measuring apparatus can be adjusted to be the same among various measuring devices as such devices are manufactured. In some embodiments, it is also possible that the data processing unit 240 be a simple microprocessor circuit which, in some preferred inventive embodiments, is integrated as part of the measuring apparatus or device. In this case, the communication between sensors and a data processing unit needs not be a serial communication link, nor is it absolutely necessary to have the serial buffers 230.

Fig 2B shows an embodiment 21, which preferably observes various application possibilities for A/D converters, as well. An acceleration sensor 250 is preferably in communication with the A/D converter 220 either by way of a weighing sensor 210 over links 251, 212 or a link 252. In one preferred embodiment, the A/D converter has its input multiplexed. This is followed by carrying the signal of both the weighing sensor 210 and the acceleration sensor 250 to the data processing unit 240 from the serial buffer 230 by way of the link 234.

In one embodiment particularly suitable for moving equipment, the acceleration sensor is used for measuring accelerations of a machine itself. Thus, the acceleration sensor is preferably adapted to measure also an angle of movement relative to a horizontal plane and/or vertical accelerations of a machine, which may appear as a result of rough driving terrain.

Fig. 2C depicts an embodiment 22, wherein multiplexing is preferably unnecessary. Each sensor 210, 250 is provided with assigned A/D converters 220, 221 and serial communication buffers 230, 231. In some embodiments, the serial buffers 230, 231 can be preferably of the type RS 232C, RS 422/485, CAN or some other corresponding type. In some preferred embodiments, however, the number of data processing units 240 is one.

In fig. 2D, on the other hand, a single serial buffer 230 is used for processing signals of two signal links provided with an A/D converter (220, 221). However, even in this embodiment the number of data processing units 240 is one, but it is possible that some embodiments of the invention be provided with several data processing units. In this case, various data processing functions are divided between data processing units preferably in such a way that the assigned data processing functions are co-processed by the data processing units.

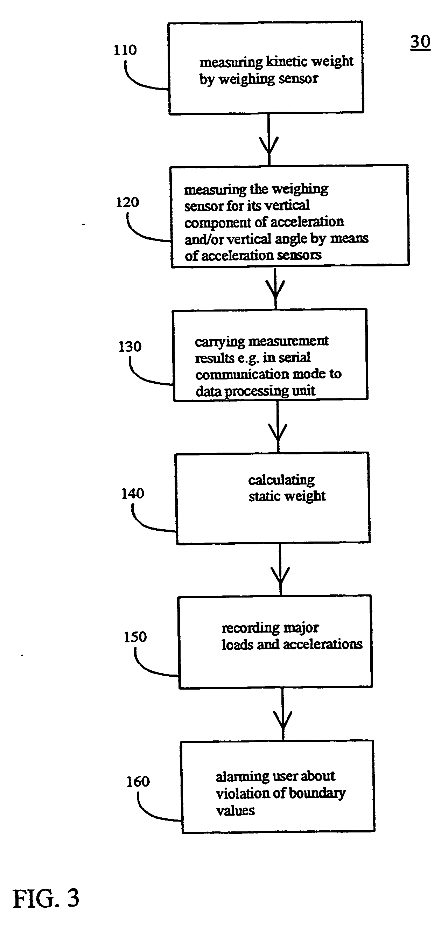

Fig. 3 shows an embodiment 30, comprising a sequence 110 for measuring a kinetic weight. This is followed by measuring a vertical component of acceleration and/or a vertical angle of the weighing sensor by means of acceleration sensors in a sequence 120. In a sequence 130, measurement results are transferred in a serial communication mode to a data processing unit. A static weight is calculated by means of the data processing unit in a sequence 140.

A sequence 150 comprises recording major loads and accelerations in a data processing unit. In some preferred embodiments of the invention, the data processing unit is used for compiling a separate register file relating to violations of boundary values during a series of weighings. Finally, the violations of boundary values are reported to a user in a sequence 160. Hence, the user may take necessary actions to make sure that the weighing apparatus is not exposed to an abrasive or hazardous overload.

In some preferred embodiments of the invention, the system is provided with a so-called effective load calculation feature. In this case, the load is monitored preferably as a relation and/of function of time. The load is preferably used for establishing an effective operating time, which involves load and/or time. In some preferred embodiments, the effective operating time can be calculated with various methods according to instructions from the manufacturer of an apparatus to be monitored. In the simplest embodiments, weighing, loading and/or acceleration data or combinations thereof is or are recorded at certain intervals. In some inventive embodiments, the recording routine is determined by an algorithm, which preferably controls the recording routine according to the measuring capacity and/or loading of the measuring equipment.

The invention has been described above with reference to the enclosed exemplary embodiments. It is obvious that the inventive method and arrangement can be applied in scales dealing with cars, vans, cranes, wheel loaders, forklift trucks, pallet trucks, reach trucks, straddle carriers, garbage trucks, timber jacks, excavators, truck cranes and other preferred scales and weighing systems. The preferred embodiments of the invention are preferably applicable in machines and equipment used for lifting, carrying, shipping, loading of goods or the like.

It is likewise obvious that, in several embodiments, a single data processing unit 240 is able to process a limitless number of signals, within its signal processing capacity.

The invention has been described above with reference to the enclosed exemplary embodiments, disclosing several major industrial benefits gained by the inventive method. The present inventive method and arrangement can be used for quickly and reliably eliminating error factors caused by acceleration and, hence, to improve the compilation of measurement results in terms of reliability and speed.

The invention has been described above with reference to the enclosed embodiments. It is obvious, however, that the invention is not limited exclusively to such embodiments, but encompasses all embodiments falling within the scope of the appended claims.

## Claims

1. A method for weighing a moving load, said method comprising the steps of
- measuring a kinetic weight of the load, the kinetic weight meaning the weight of the load when in movement, by means of at least one weighing sensor (110),
- measuring the at least one weighing sensor for its vertical component of acceleration and/or vertical angle, said vertical angle meaning the position of the measurement axis of the weighing sensor in relation to the vertical direction, by means of an acceleration sensor (120),
- delivering measurement results from said weighing sensor and acceleration sensor to a data processing unit (130),
- calculating a static weight (140) of the load by compensating the measured kinetic weight value with the vertical component of acceleration value and/or vertical angle value on the basis of the measurement results, the static weight meaning the weight of the load when not in movement,
**characterized in that** the method further comprises the steps for
- determining a boundary value for the load and/or acceleration and/or variations in load and/or accelerations,
- comparing at least one measurement result with said boundary value, and
- when the measurement result is outside said boundary value, reporting of the violating of the boundary value (160).

2. A weighing method as set forth in claim 1, **characterized in that** a data processing unit (240) comprises a PC or some other relevant preferred computer-based apparatus, such as a Psion or Macintosh, or a mobile communicator, such as a UMTS, GSM, CDMA, WCDMA, NMT, Iridium, Inmarsat or TelDesic mobile communicator.

3. A weighing method as set forth in claim 1, **characterized in that** the highest and/or lowest loads and/or accelerations and/or variations in load and/or accelerations are recorded.

4. A weighing method as set forth in claim 1, **characterized in that**
- at least one analog output signal of at least one sensor (210, 250) is digitized,
- said digital signal is transmitted in a serial mode to the data processing unit (240) from serial communication buffers (230, 231).

5. A weighing method as set forth in claim 1, **characterized in that** the acceleration sensor (250) keeps measuring the angle of a movement and/or a machine/sensor relative to the horizontal plane of terrain.

6. A weighing method as set forth in claim 1, **characterized in that** the highest and/or lowest loads and/or accelerations and or variations in load and/or accelerations are recorded on the basis of a recording algorithm, which establishes a recording routine on the basis of load and/or measuring capacity.

7. A method as set forth in claim 1, **characterized in that** at least one calibration value for a setting parameter of at least one sensor is recorded in communication with the same apparatus as said sensor.

8. A weighing method as set forth in claim 1, **characterized in that** said method is applied in scales dealing with cars, vans, cranes, wheel loaders, forklifts, pallet trucks, reach trucks, straddle carriers, garbage trucks, timber jacks, excavators, truck cranes, and other scales and weighing systems.

9. A weighing arrangement for weighing a moving load, comprising
- at least one weighing sensor (110) for measuring a kinetic weight of the load, the kinetic weight meaning the weight of the load subject to movement,
- an acceleration sensor (120) for measuring the at least one weighing sensor for its vertical component of acceleration and/or vertical angle, said vertical angle meaning the position of the measurement axis of the weighing sensor in relation to the vertical direction,
- a data processing unit (130),
- means for delivering said measurement results from the weighing sensor and the acceleration sensor to the data processing unit (130),
said data processing unit comprising means for calculating a static weight (140) of the load on the basis of said measurement results, the static weight meaning the weight of the load when not in movement,
the arrangement being **characterized by**
- means for comparing at least one measurement result with a predetermined boundary value for the load and/or acceleration and/or variations in load and/or accelerations, and
- means for reporting of violating the boundary value (160) when the measurement result is outside said boundary value.

10. A weighing arrangement as set forth in claim 9, **characterized by** comprising
- means for digitizing a signal,
- serial communication means (230, 231) for carrying said digital signal in a serial mode to a data processing unit (240).

11. A weighing arrangement as set forth in claim 10, **characterized in that** an acceleration sensor (250), a weighing sensor (210), at least one A/D converter (220, 221) and/or at least one serial communication buffer (230, 231) are integrated for a single measuring apparatus.

12. A weighing arrangement as set forth in claim 9, **characterized in that** the data processing unit (240) comprises a PC or some other preferred computer-based apparatus, such as a Psion or Apple Macintosh, or a mobile communicator, such as a UMTS, GSM, CDMA, WCDMA, NMT, Iridium, Inmarsat or TelDesic mobile communicator.

13. A weighing arrangement as set forth in claim 9, **characterized in that** the data processing unit (240) comprises a microprocessor circuit, which is integrated as part of a measuring apparatus.

14. A weighing arrangement as set forth in claim 9, **characterized by** comprising means for recording a calibration value for at least one setting parameter of at least one sensor, said recording means being included in the same measuring apparatus as said sensor.

15. Use of a weighing arrangement as set forth in claim 9 in scales dealing with cars, vans, cranes, wheel loaders, forklifts, pallet trucks, reach trucks, straddle carriers, garbage trucks, timber jacks, excavators, truck cranes, and other scales and weighing systems.

## Patentansprüche

1. Verfahren zum Wiegen einer sich bewegenden Last, umfassend folgende Schritte:
- Messen eines kinetischen Gewichts der Last mit Hilfe mindestens eines Wiegesensors (110), wobei unter kinetischem Gewicht das Gewicht der Last, während sie sich in Bewegung befindet, verstanden wird,
- Messen der vertikalen Beschleunigungskomponente und/oder des vertikalen Winkels des mindestens einen Wiegesensors mit Hilfe eines Beschleunigungssensors (120), wobei unter vertikalem Winkel die Position der Messachse des Wiegesensors mit Bezug auf die vertikale Richtung verstanden wird,
- Liefern der Messergebnisse des Wiegesensors und Beschleunigungssensors an eine Datenverarbeitungseinheit (130),
- Berechnen eines statischen Gewichts (140) der Last durch Ausgleichen des gemessenen kinetischen Gewichtswerts durch die vertikale Komponente des Beschleunigungswerts und/oder den vertikalen Winkelwert aufgrund der Messergebnisse, wobei unter statischem Gewicht das Gewicht der Last, wenn sie sich nicht in Bewegung befindet, verstanden wird,
**dadurch gekennzeichnet, dass** das Verfahren weiterhin folgende Schritte umfasst:
- Bestimmen eines Grenzwerts für die Last und/oder die Beschleunigung und/oder die Veränderungen in der Last und/oder in den Beschleunigungen,
- Vergleichen mindestens eines Messergebnisses mit dem Grenzwert, und
- wenn das Messergebnis außerhalb des Grenzwerts liegt, Melden der Verletzung des Grenzwerts (160).

2. Wiegeverfahren nach Anspruch 1, **dadurch gekennzeichnet, dass** eine Datenverarbeitungseinheit (240) einen PC oder irgendeine andere relevante bevorzugte Computervorrichtung, wie einen Psion oder Macintosh oder einen Mobilkommunikator wie einen UMTS, GSM, CDMA, WCDMA, NMT, Iridium, Inmarsat oder TelDesic Mobilkommunikator umfasst.

3. Wiegeverfahren nach Anspruch 1, **dadurch gekennzeichnet, dass** die höchsten und/oder niedrigsten Lasten und/oder Beschleunigungen und/oder die Veränderungen in der Last und/oder in den Beschleunigungen aufgezeichnet werden.

4. Wiegeverfahren nach Anspruch 1, **dadurch gekennzeichnet, dass**
- mindestens ein analoges Ausgangssignal mindestens eines Sensors (210, 250) digitalisiert wird,
- das digitale Signal in einem seriellen Modus von seriellen Kommunikationspuffern (230, 231) an die Datenverarbeitungseinheit (240) gesendet wird.

5. Wiegeverfahren nach Anspruch 1, **dadurch gekennzeichnet, dass** der Beschleunigungssensor (250) anhaltend den Winkel einer Bewegung und/oder einer Maschine/eines Sensors mit Bezug auf die horizontale Ebene des Terrains misst.

6. Wiegeverfahren nach Anspruch 1, **dadurch gekennzeichnet, dass** die höchsten und/oder niedrigsten Lasten und/oder Beschleunigungen und/oder die Veränderungen in der Last und/oder in den Beschleunigungen aufgrund eines Aufzeichnungsalgorithmus aufgezeichnet werden, der auf der Basis der Belastbarkeit und/oder des Messbereichs eine Aufzeichnungsroutine einrichtet.

7. Wiegeverfahren nach Anspruch 1, **dadurch gekennzeichnet, dass** mindestens ein Kalibrierungswert für einen Einstellparameter mindestens eines Sensors in Kommunikation mit der gleichen Vorrichtung als Sensor aufgezeichnet wird.

8. Wiegeverfahren nach Anspruch 1, **dadurch gekennzeichnet, dass** das Verfahren in Waagen, auf denen Autos, Nutzfahrzeuge, Kräne, Radlader, Gabelstapler, Palettenstapler, Schubgabelstapler, Torstapler, Müllabfuhrwagen, Bauholz-Hubroller, Bagger, Automobilkräne gewogen werden, und in anderen Waagen und Wiegeeinrichtungen zum Einsatz kommt.

9. Wiegeeinrichtung zum Wiegen einer sich bewegenden Last, umfassend:
- mindestens einen Wiegesensor (110) zum Messen eines kinetischen Gewichts der Last, wobei unter kinetischem Gewicht das Gewicht der einer Bewegung ausgesetzten Last verstanden wird,
- einen Beschleunigungssensor (120) zum Messen der vertikalen Beschleunigungskomponente und/oder des vertikalen Winkel des mindestens einen Wiegesensors, wobei unter vertikalem Winkel die Position der Messachse des Wiegesensors mit Bezug auf die vertikale Richtung verstanden wird,
- eine Datenverarbeitungseinheit (130),
- Mittel zum Liefern der Messergebnisse vom Wiegesensor und Beschleunigungssensor an die Datenverarbeitungseinheit (130), wobei die Datenverarbeitungseinheit Mittel zum Berechnen eines statischen Gewichts (140) der Last aufgrund der Messergebnisse umfasst, wobei unter statischem Gewicht das Gewicht der Last, wenn sie sich nicht in Bewegung befindet, verstanden wird,
wobei die Einrichtung **gekennzeichnet ist durch**
- Mittel zum Vergleichen mindestens eines Messergebnisses mit einem vordefinierten Grenzwert für die Last und/oder die Beschleunigung und/oder die Veränderungen in der Last und/oder in den Beschleunigungen, und
- Mittel zum Melden einer Verletzung des Grenzwerts (160), wenn das Messergebnis außerhalb des Grenzwerts liegt.

10. Wiegeeinrichtung nach Anspruch 9, **dadurch gekennzeichnet, dass** sie umfasst:
- Mittel zum Digitalisieren eines Signals,
- serielle Kommunikationsmittel (230, 231) zum Übertragen des digitalen Signals in einem seriellen Modus an eine Datenverarbeitungseinheit (240).

11. Wiegeeinrichtung nach Anspruch 10, **dadurch gekennzeichnet, dass** ein Beschleunigungssensor (250), ein Wiegesensor (210), mindestens ein A/D-Konverter (220, 221) und/oder mindestens ein serieller Kommunikationspuffer (230, 231) in eine einzige Messvorrichtung integriert werden.

12. Wiegeeinrichtung nach Anspruch 9, **dadurch gekennzeichnet, dass** die Datenverarbeitungseinheit (240) einen PC oder irgendeine andere Computervorrichtung wie einen Psion oder Apple Macintosh, oder einen Mobilkommunikator wie einen UMTS, GSM, CDMA, WCDMA, NMT, Iridium, Inmarsat oder TelDesic Mobilkommunikator umfasst.

13. Wiegeeinrichtung nach Anspruch 9, **dadurch gekennzeichnet, dass** die Datenverarbeitungseinheit (240) einen Mikroprozessorschaltkreis umfasst, der als Teil einer Messvorrichtung in diese integriert ist.

14. Wiegeeinrichtung nach Anspruch 9, **gekennzeichnet durch** Mittel zum Melden eines Kalibrierungswerts für mindestens einen Einstellparameter mindestens eines Sensors, wobei die Aufzeichnungsmittel in der gleichen Messvorrichtung als Sensor enthalten sind.

15. Einsatz einer Wiegeeinrichtung nach Anspruch 9 in Waagen, auf denen Autos, Nutzfahrzeuge, Kräne, Radlader, Gabelstapler, Palettenstapler, Schubgabelstapler, Torstapler, Müllabfuhrwagen, Bauholz-Hubroller, Bagger, Automobilkräne gewogen werden, sowie in anderen Waagen und Wiegeeinrichtungen.

## Revendications

1. Procédé de pesage d'une charge mobile, ledit procédé comprenant les étapes consistant à
- mesurer un poids cinétique de la charge, le poids cinétique signifiant le poids de la charge en mouvement, au moyen d'au moins un capteur de pesage (110),
- mesurer l'au moins un capteur de pesage pour sa composante verticale d'accélération et/ou son angle vertical, ledit angle vertical signifiant la position de l'axe de mesure du capteur de pesage par rapport à la direction verticale, au moyen d'un capteur d'accélération (120),
- fournir les résultats de mesure provenant desdits capteur de pesage et capteur d'accélération à une unité de traitement de données (130),
- calculer un poids statique (140) de la charge en compensant la valeur du poids cinétique mesuré par la composante verticale de la valeur d'accélération et/ou de la valeur d'angle vertical en fonction des résultats de mesure, le poids statique signifiant le poids de la charge lorsqu'elle n'est pas en mouvement,
**caractérisé en ce que** le procédé comprend en outre les étapes consistant à
- déterminer une valeur limite pour la charge et/ou l'accélération et/ou les variations de charge et/ou d'accélérations,
- comparer au moins un résultat de mesure avec ladite valeur limite, et
- lorsque le résultat de mesure est en dehors de ladite valeur limite, faire état de la violation de la valeur limite (160).

2. Procédé de pesage selon la revendication 1, **caractérisé en ce qu'**une unité de traitement de données (240) comprend un PC ou tout autre appareil informatique préféré pertinent, tel qu'un Psion ou Macintosh, ou un appareil de communication mobile, tel qu'un appareil de communication mobile UMTS, GSM, CDMA, WCDMA, NMT, Iridium, Inmarsat ou TelDesic.

3. Procédé de pesage selon la revendication 1, **caractérisé en ce que** les charges et/ou accélérations et/ou variations de charge et/ou d'accélérations les plus élevées et/ou les plus basses sont enregistrées.

4. Procédé de pesage selon la revendication 1, **caractérisé en ce que**
- au moins un signal de sortie analogique d'au moins un capteur (210, 250) est numérisé,
- ledit signal numérique est transmis dans un mode série à l'unité de traitement de données (240) à partir de tampons de communication en série (230, 231).

5. Procédé de pesage selon la revendication 1, **caractérisé en ce que** le capteur d'accélération (250) continue de mesurer l'angle d'un mouvement et/ou d'une machine/d'un capteur par rapport au plan horizontal du terrain.

6. Procédé de pesage selon la revendication 1, **caractérisé en ce que** les charges et/ou accélérations et/ou variations de charge et/ou d'accélérations les plus élevées et/ou les plus basses sont enregistrées en fonction d'un algorithme d'enregistrement qui établit un sous-programme d'enregistrement en fonction de la capacité de charge et/ou de mesure.

7. Procédé selon la revendication 1, **caractérisé en ce qu'**au moins une valeur d'étalonnage pour un paramètre de réglage d'au moins un capteur est enregistrée en communication avec le même appareil que ledit capteur.

8. Procédé de pesage selon la revendication 1, **caractérisé en ce que** ledit procédé est appliqué aux balances touchant aux voitures, camionnettes, grues, chargeuses à pneus, chariots élévateurs à fourche, transpalettes, camions à portée, chariots cavaliers, camions à ordures, crics forestiers, excavateurs, grues sur porteur et autres balances et systèmes de pesage.

9. Agencement de pesage pour le pesage d'une charge mobile, comprenant
- au moins un capteur de pesage (110) pour mesurer un poids cinétique de la charge, le poids cinétique signifiant le poids de la charge soumise à un mouvement,
- un capteur d'accélération (120) pour mesurer l'au moins un capteur de pesage pour sa composante verticale d'accélération et/ou son angle vertical, ledit angle vertical signifiant la position de l'axe de mesure du capteur de pesage par rapport à la direction verticale,
- une unité de traitement de données (130),
- des moyens pour fournir lesdits résultats de mesure provenant du capteur de pesage et du capteur d'accélération à l'unité de traitement de données (130),
ladite unité de traitement de données comprenant des moyens pour calculer un poids statique (140) de la charge en fonction desdits résultats de mesure, le poids statique signifiant le poids de la charge lorsqu'elle n'est pas en mouvement, l'agencement étant **caractérisé par**
- des moyens pour comparer au moins un résultat de mesure à une valeur limite prédéterminée pour la charge et/ou l'accélération et/ou les variations de charge et/ou d'accélérations, et
- des moyens pour faire état de la violation de la valeur limite (160) lorsque le résultat de mesure est en dehors de ladite valeur limite.

10. Agencement de pesage selon la revendication 9, **caractérisé en ce qu'**il comprend
- des moyens pour numériser un signal,
- des moyens de communication en série (230, 231) pour porter ledit signal numérique dans un mode série à une unité de traitement de données (240).

11. Agencement de pesage selon la revendication 10, **caractérisé en ce qu'**un capteur d'accélération (250), un capteur de pesage (210), au moins un convertisseur A/N (220, 221) et/ou au moins un tampon de communication en série (230, 231) sont intégrés pour un appareil de mesure unique.

12. Agencement de pesage selon la revendication 9, **caractérisé en ce que** l'unité de traitement de données (240) comprend un PC ou tout autre appareil informatique préféré, tel qu'un Psion ou Apple Macintosh, ou un appareil de communication mobile, tel qu'un appareil de communication mobile UMTS, GSM, CDMA, WCDMA, NMT, Iridium, Inmarsat ou TelDesic.

13. Agencement de pesage selon la revendication 9, **caractérisé en ce que** l'unité de traitement de données (240) comprend un circuit de microprocesseur qui est intégré comme partie d'un appareil de mesure.

14. Agencement de pesage selon la revendication 9, **caractérisé en ce qu'**il comprend des moyens pour enregistrer une valeur d'étalonnage pour au moins un paramètre de réglage d'au moins un capteur, lesdits moyens d'enregistrement étant compris le même appareil de mesure que ledit capteur.

15. Utilisation d'un agencement de pesage selon la revendication 9 dans des balances touchant aux voitures, camionnettes, grues, chargeuses à pneus, chariots élévateurs à fourche, transpalettes, camions à portée, chariots cavaliers, camions à ordures, crics forestiers, excavateurs, grues sur porteur et autres balances et systèmes de pesage.
